# EUROPEAN PATENT APPLICATION

(11) **EP 4 322 111 A1**
(43) Date of publication of application: **14.02.2024**
(21) Application number: 22190155.6
(22) Date of filing: 12.08.2022
(51) Int. Cl.: G06T 15/08

(54) **VOLUMETRIC PEELING METHOD FOR MONTE CARLO PATH TRACING**

(71) Applicant: Siemens Healthineers AG, 91301 Forchheim (DE)
(72) Inventor: Engel, Klaus, 90491 Nürnberg (DE)
(74) Representative: Siemens Healthineers Patent Attorneys

(57) **Abstract**

A computer-implemented method for rendering an image of a volumetric medical dataset using path tracing of rays, comprises determining, for at least one ray to be traced along a ray path through the volumetric medical dataset, a plurality of samples of the volumetric medical dataset along the ray path, determining an opacity value for each of the samples based on the volumetric medical dataset, determining, based on the opacity values of the plurality of samples, a peeling depth for the at least one ray, representing a distance from the ray origin along the ray path, and rendering an image of the volumetric medical dataset using the peeling depth.

## Description

Various examples of the disclosure generally relate to ray tracing for rendering an image of a volumetric dataset. Various examples of the disclosure specifically relate to peeling methods and space-skipping for Monte Carlo path tracing in medical volume rendering.

In 3D visualization of volumetric data derived from CT, MRT and other modalities, a fundamental problem is occlusion, wherein certain structures occlude other potentially important structures. This is common when projection methods, such as ray casting or volumetric path tracing, are employed to produce 3D visualizations of volumetric data. It is a fundamental disadvantage to using MPR (Multi Planar Reformatting) as a visualization method, which shows arbitrary slices through the volume data without any occlusion. This disadvantage of 3D rendering methods in comparison to MPR has hindered such methods from becoming a routine method in the evaluation of medical findings.

In volumetric rendering, existing techniques include clip planes, crop boxes, windowing of transfer functions, and segmentation of volumetric data with selective removal of occluding anatomy in medical visualization. For the visualization of the heart for example, heart isolation segmentation masks are generated to prevent the ribcage from occluding the view on the heart of a patient. Clip planes and crop boxes are used to geometrically remove anatomy occupying selected spatial areas of the acquisition domain.

Therefore, the idea of the presented approach is to provide advanced techniques for rendering volumetric data, which overcome or mitigate at least some of the limitations and disadvantages mentioned.

This task is solved by the features of the independent claims. Further advantageous examples are included in the dependent claims.

In the following, the solution according to the invention is described with regard to the claimed methods as well as with regard to the claimed computing devices, computer programs, storage media, and medical systems, wherein features, advantages, or alternative embodiments can be assigned to the other claimed objects and vice versa. For example, the claims related to the computing devices, computer programs and storage media can be improved with features described in the context of the methods, and the claims related to the methods can be improved with features described in the context of the computing devices, computer programs and storage media. For example, features described in the context of the methods for determining a peeling depth may be used to improve the methods for using a predetermined peeling depth for rendering an image.

A method for generating a visual representation, in particular rendering an image, based on a volumetric dataset using path tracing of a ray along a ray path comprising a plurality of samples of the volumetric dataset, using a simulation method based on ray tracing, such as a ray casting method with only primary rays, or path tracing method with primary and secondary rays, in particular a Monte Carlo path tracing method, is provided.

In various examples, a volumetric dataset may comprise raw and/or processed measurement data of a medical imaging system, such as for example a Magnetic Resonance Imaging (MRI) system or Computer Tomography (CT) system, or any other imaging system, that provides a volumetric dataset consisting of data or information at sample locations in space. In various examples, the data may be a scalar, a vector or a higher-order tensor. In general, the space may be 3D space, consisting of either three spatial dimensions or any combination of spatial and frequency dimensions. For example, data may be sampled on a rectilinear grid, represented as a 3D grid of volume elements, i.e. voxels. The input dataset may be received from a data storage or another computing device, or directly from an imaging hardware system. In other words, the data set may comprise volumetric imaging data, in particular medical volumetric imaging data. Accordingly, in various examples, the image may be referred to as a rendered image based on a volumetric imaging dataset. A volumetric dataset may be obtained as input data set.

In a step, for a ray originating from a pixel of an image to be rendered from the volumetric dataset, a plurality of samples are determined, which are used to form a ray path of a light ray to be traced through the volumetric dataset. A sample may be determined as starting point for ray tracing or path tracing of a ray through the volumetric dataset, typically within a pixel of an image to be rendered. A pixel may refer to a pixel in a virtual camera pixel matrix, which may be characterized by a predetermined viewing angle, viewing distance, and viewing orientation in relation to the object to be rendered and one or more virtual light sources for the object to be rendered. From the starting point, the ray is traced through the volumetric dataset, i.e. is traced from sample location to sample location in the volumetric dataset, wherein optical characteristics of the pixel are determined based on all passed samples. In other words, the ray is traced along a ray path through the volumetric dataset, wherein the path starts at an initial sample position, usually located within a pixel of a virtual camera pixel array, or any other start sample position within the volumetric dataset, and moves from sample to sample within the volumetric dataset. In such a way, a plurality of samples may be identified or generated for the ray, which may be stochastically sampled within each of a plurality of voxels of the volumetric dataset, and which form a path along which a ray is traced.

In a step, for each of the samples, an opacity value for each of the samples is determined based on the volumetric medical dataset. Along the way, optical or imaging characteristics of each sample with regard to the passing ray may be taken into account, in order to compute the visual appearance of the pixel to be rendered. Each of the samples may be associated with corresponding raw or processed measurement data, and may be associated with one or more of an opacity value, which is also referred to as alpha value, describing an opacity of the sample position with regard to the through-passing ray, and one or more of colour values, which may be assigned or mapped to the sample by and/or using a predetermined transfer function based on the measurement data associated with the sample.

In a step, based on and/or using the determined opacity values of the samples, that are passed in order along the ray path, a peeling depth is determined for the at least one ray respectively pixel, which may represent or correspond to a distance from the ray origin, i.e. the camera pixel or camera pixel array comprising the pixel, e.g. to a certain sample. In other words, the peeling depth may comprise a peeling depth value, which is to be compared with the depth (or depth value) of a sample, i.e. a peeling depth may generally be referred to or function as a depth threshold, for determining for a given sample, if it is located before or after the peeling depth along the traced ray.

The different options for determining of the peeling depth will be described in the following in further detail.

In various examples, an opacity threshold for the opacity values may be obtained, wherein determining the peeling depth comprises determining the peeling depth based on the opacity threshold.

In various examples, said determining of the peeling depth may comprise determining the first sample along the ray path with an opacity value greater than the opacity threshold. For instance, the opacity threshold may be zero, or close to zero, such that that a sample with an opacity value below the opacity threshold does not contribute to the rendered image. Subsequently, the peeling depth for the pixel and/or the ray may be determined based on the first sample, for example as the depth value of this first sample, wherein the depth or depth value describes the distance of the sample along the ray path from the beginning of the path or the first sampling position, i.e. usually within the camera pixel position.

In various examples, said determining of the peeling depth may comprise, accumulating the opacity values of the samples along the ray path to an accumulated opacity value. If it is determined, that the accumulated opacity value is greater than the opacity threshold, then the peeling depth may be determined based on the accumulated samples, for example as the depth of the last accumulated sample. In general, the peeling depth may be determined based on the depth of the last accumulated sample, or based on the depths of one or more of the last accumulated samples, or one or more samples following the last accumulated samples.

In various examples, said determining of the peeling depth may comprise counting the number of samples, which have opacity values greater than a counting threshold. Such a counting threshold may be for example zero, i.e. fully transparent, or any value between zero and one, untransparent. If it is determined that the number of samples is greater than the opacity threshold, then the peeling depth may be determined based on the counted samples, for example as the depth of the last counted sample. In general, the peeling depth may be determined based on the depths of the last counted samples, or based on the depths of one or more of the last counted samples, or following samples.

In various examples, when the peeling depth for the pixel and/or ray has been determined, one or more samples may be determined, which have opacity values of samples with depths lower than the peeling depth. Those samples may be marked or modified such that they do not contribute to the rendering of the image. For example, the opacity values of the samples may be set to zero, such that they do not contribute to the rendered image.

In general, the samples with depths lower than the peeling depth may be flagged or marked, such they may not taken into account when rendering the image pixel or when performing another ray tracing pass for rendering the pixel, or measurement data and/or imaging characteristics associated with those samples may be modified, such that the samples may not contribute to the pixel during rendering.

For example, the opacity values may be set to a partly transparent value, in other words the opacity, i.e. alpha, value is set to a predetermined value or reduced in a predetermined way, by a predetermined reduction factor or reduction value, based on the current opacity value. In such a way, the peeled layer may be visible, but to a low extent in the rendered image. It would be possible, that the reduction of the opacity value is performed based on a distance (depth distance) to the peeling depth and/or based on a transition function in a transition region. In such a way, the peeling may not be performed as a 0-1 step, i.e. there may not be a sudden transition to zero below a peeling depth, but it may be a gradual transition to zero in a transition region around the peeling depth. For example, samples with depths greater than the peeling depth may be fully visible, opacity values of samples with depth values in a transition depth region (adjacent to the peeling depth, in direction of lower depth values) may be gradually reduced by a transition function based on their (depth) distance from the peeling depth, and samples with depth values lower than the transition region may be invisible in the rendered image, i.e. omitted in the ray tracing algorithm or opacity values set to zero.

In a step, the ray tracing of the ray may be continued, in order to pass further samples along the ray path, and to render an image of the volumetric dataset. In other words, the image of the volumetric dataset may be rendered based on or using the peeling depth.

In various examples, rendering of the image of the volumetric medical dataset may comprise tracing a further ray associated with the pixel. For the further ray, a starting sample of the ray path may be determined using the peeling depth. The further ray may be traced along a ray path beginning from the starting sample, wherein samples having a depth lower than the peeling depth are not taken into account during path tracing.

Alternatively, once the peeling depth has been determined for a viewing angle, the predetermined peeling depth may be used in a further ray tracing pass, e.g. for the same viewing angle. Therein, samples having depths lower than the peeling depth, may not contribute to the optical appearance of the pixel, for which the ray is traced.

In various examples, a separate rendering pass, based on a previously determined peeling depth, may be executed as a separate method.

A computer-implemented method for rendering an image of a volumetric medical dataset using path tracing of rays, and using a predetermined peeling depth, which has been determined according to one of the disclosed techniques, comprises the following steps. In a step, a peeling depth for a pixel is obtained, which is depth, i.e. distance, from the pixel to a sample location in the volumetric dataset. In a further step, for at least one ray to be traced along a ray path associated with the pixel, a plurality of samples of the volumetric medical dataset along the ray path are determined, which lie on the ray path, wherein the samples have depths only greater than the peeling depth, i.e. samples that have a depth below the peeling depth, are skipped. In other words, the peeling depth is used to define the ray path, wherein the ray path starts with a sample having a depth, which is determined based on and/or using the peeling depth. In a further step, the ray may traced through a plurality of the samples, and an image of the volumetric medical dataset may be rendered based on the samples with depths greater than the peeling depths, wherein the samples that have a depth lower than the peeling depth are not taken into account during the ray tracing for the rendering. Alternatively, the opacity values of samples having a depth below the peeling depth may be set to zero, such that they do not contribute to the rendering of the pixel.

In various examples, when rendering an image of the volumetric medical dataset in a rendering pass, the peeling depth may be used for determining a starting point of a ray path for the pixel. In various examples, the samples that have depths below the peeling depth, may be skipped during rendering. The rendering method may comprise determining a starting sample of a ray path using the peeling depth, and tracing the ray path beginning from the starting sample. For example, a starting sample may be a sample that has a depth close to the peeling depth. When starting the ray tracing algorithm from a sample close to the peeling depth, the samples that have depths greater than the peeling depth, are taken into account during ray tracing, and the samples that have depths below the peeling depth are skipped and are not taken into account during the ray tracing simulation.

For example, a peeling depth may be dependent of and stored for a particular virtual camera position and orientation, i.e. viewing angle of the path tracing algorithm. In particular, when using the depth of the first sample along the ray path with a non-zero opacity value, then such a peeling depth may be used for space skipping, i.e. to start path tracing at a location closer to the rendered object, and skipping sample locations with zero opacity values, which do not contribute to the rendered image, thus accelerating the rendering process and saving memory and computing resources.

By the disclosed techniques, a view-dependent depth peeling functionality may be provided, using a single user defined threshold, wherein the removal of occluding anatomy changes with the camera orientation. For the explorative examination of medical scans such as the virtual dissection of body donor scans in anatomy learning applications, such a peeling method allows to examine structures layer by layer. This is more natural than the common geometric cutting of the volume data using clip planes and crop boxes and permits better preparation for the actual dissection, which is usually also performed using a similar layer by layer approach. Furthermore, by a peeling method it becomes possible to detect anatomical details embedded under the surface of the skin, vessels, bone or organs, that would be overlooked using traditional volume exploration methods such as transfer functions and cutting geometries. By starting a rendering pass at the peeling depth, computing ressources may be more efficiently used for a smooth animated rendering.

A computing device is provided comprising at least one processor and memory, the memory comprising instructions executable by the processor, wherein when executing the instructions in the processor, the computing device is configured to perform the steps of any method or combination of methods according to the present disclosure.

A computer program or a computer-program product and a computer-readable storage medium including program code is provided. The program code can be executed by at least one processor. Upon executing the program code, the at least one processor performs any method or combination of methods according to the present disclosure.

An imaging system, more specifically a medical imaging system, comprises at least one computing device according to the present disclosure.

For the electronic devices, computer program products, non-transitory computer-readable storage medium, and imaging system, advantages may be realized, which correspond to the advantages described for the methods.

It is to be understood that the features mentioned above and features yet to be explained below can be used not only in the respective combinations indicated, but also in other combinations or in isolation, without departing from the scope of the present disclosure. In particular, features of the disclosed embodiments may be combined with each other in further embodiments.

The above summary is therefore only intended to give a brief overview of some features of some embodiments and implementations and is not to be understood as a limitation. Other embodiments may include features other than those described above.

The present disclosure is described in more detail below with reference to the accompanying drawings, in which like reference numerals refer to like elements.
FIG. 1 schematically illustrates a rendering of a person's head with two different peeling depths, according to various examples.
FIG. 2 schematically illustrates a rendering of a person's upper body and head with two different peeling depths, according to various examples.
FIG. 3 schematically illustrates a further rendering of the person's upper body and head of FIG. 2 with a third different peeling depth, according to various examples.
FIG. 4 schematically illustrates a further rendering of the person's head of FIG. 1, wherein samples with depths below a peeling depth have been skipped according to a depth map during rendering, according to various examples.
FIG. 5 schematically illustrates the depth map used for the rendering of FIG. 4, according to various examples.
FIG. 6 schematically illustrates steps of a method for rendering an image of a volumetric medical dataset, according to various examples.
FIG. 7 schematically illustrates a computing device configured for executing a method according to the present disclosure, according to various examples.

In the following, embodiments of the invention will be described in detail with reference to the accompanying drawings. It is to be understood that the following description of embodiments is not to be taken in a limiting sense. The scope of the invention is not intended to be limited by the embodiments described hereinafter or by the drawings, which are taken to be illustrative only.

The drawings are to be regarded as being schematic representations and elements illustrated in the drawings are not necessarily shown to scale. Rather, the various elements are represented such that their function and general purpose become apparent to a person skilled in the art. Any connection or coupling between functional blocks, devices, components, or other physical or functional units shown in the drawings or described herein may also be implemented by an indirect connection or coupling. A coupling between components may also be established over a wireless connection. Functional blocks may be implemented in hardware, firmware, software, or a combination thereof.

Some examples of the present disclosure generally provide for a plurality of circuits or other electrical devices. All references to the circuits and other electrical devices and the functionality provided by each are not intended to be limited to encompassing only what is illustrated and described herein. While particular labels may be assigned to the various circuits or other electrical devices disclosed, such labels are not intended to limit the scope of operation for the circuits and the other electrical devices. Such circuits and other electrical devices may be combined with each other and/or separated in any manner based on the particular type of electrical implementation that is desired. It is recognized that any circuit or other electrical device disclosed herein may include any number of microcontrollers, a graphics processor unit (GPU), integrated circuits, memory devices (e.g., FLASH, random access memory (RAM), read only memory (ROM), electrically programmable read only memory (EPROM), electrically erasable programmable read only memory (EEPROM), or other suitable variants thereof), and software which coact with one another to perform operation(s) disclosed herein. In addition, any one or more of the electrical devices may be configured to execute a program code that is embodied in a non-transitory computer readable medium programmed to perform any number of the functions as disclosed.

Various techniques described herein generally relate to ray tracing simulations that create a visual appearance of scientific volumetric data based on tracing a path of a light ray through a plurality of samples of the volumetric dataset, specifically to Monte Carlo path tracing simulations, which comprise statistically distributed sampling positions of rays within a pixel, and statistically distributed sampling positions within the voxels.

A fundamental problem in 3D visualization of volume data from CT, MRT and other modalities is occlusion, i.e. certain (anatomical) structures occlude other potentially important structures. This is common when projection methods, such as ray casting or volumetric path tracing, are employed to produce 3D visualizations of volumetric data. It is a fundamental disadvantage to using MPR (Multi Planar Reformatting) as a visualization method, which shows arbitrary slices through the volume data without any occlusion. This disadvantage of 3D rendering methods in comparison to MPR has hindered such methods from becoming a routine method in the evaluation of medical findings.

Additionally, for the explorative examination of medical scans such as the virtual dissection of body donor scans in anatomy learning applications, a peeling feature would allow to examine structures layer by layer. This is more natural than the common geometric cutting of the volume data using clip planes and crop boxes and permits better preparation for the actual dissection, which is usually also performed using a similar layer by layer approach.

There is also the potential for a peeling method to detect anatomical details embedded under the surface of the skin, vessels, bone or organs, that would be overlooked using traditional volume exploration methods such as transfer functions and cutting geometries.

Clip planes, crop boxes, windowing of transfer functions and the segmentation of volumetric data with selective removal of occluding anatomy are standard methods in medical visualization of overcome such limitations in volumetric rendering. For the visualization of the heart for example, heart isolation segmentation masks are generated to prevent the ribcage from occluding the view on the heart of a patient. Clip planes and crop boxes are used to geometrically remove anatomy occupying selected spatial areas of the acquisition domain.

The disclosed techniques provide a view-dependent peeling method for removing anatomy during ray casting or Monte Carlo path tracing. A user-defined scalar parameter defines the depth of the peeling into the volumetric data. By changing the peeling depth value, the user is able to peel layer by layer from the anatomy. This peeling is dependent on the view orientation and the transfer function, i.e. if the skin of the anatomy is visible, it will be the first layer to be peeled, while if muscles are visible due to the transfer function, the muscle layer will be first to be peeled. Afterward the next layer, for example bone will be peeled. This is an incremental process, so the part of the bone closest to the viewer will be peeled, i.e. the front side of the bone, revealing the bone marrow, then the backside of the bone will be peeled.

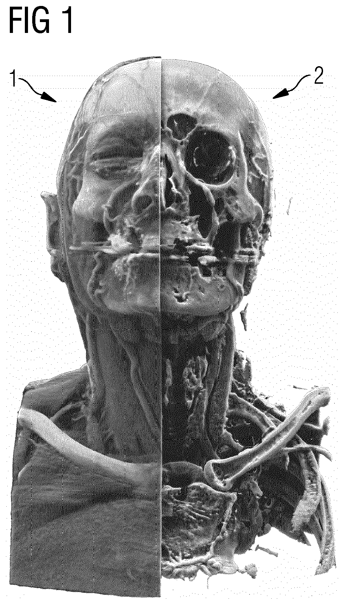

FIG. 1 schematically illustrates a rendering of a person's head with two different peeling depths, according to various examples.

As can be seen in FIG. 1, on the left side, a first half 1 of the head is depicted with blood vessels and tissue, and on the right side, the second half 2 of the head is depicted, wherein the blood vessels and tissue have been removed and the bone is visible. By using a Monte Carlo path tracing method with a plurality of virtual light sources, photorealistic sectional images have been generated. Both parts of the image have been generated from the same volumetric dataset, by using peeling methods with different peeling depths, according to the present disclosure.

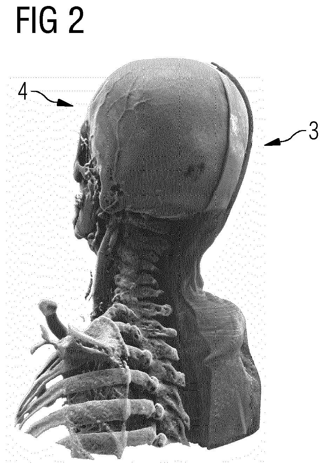

FIG. 2 schematically illustrates a rendering of a person's upper body and head with two different peeling depths, according to various examples.

In the image of FIG. 2, on the back part 3, the skin has been removed showing tissue and muscles of the torso, and on the front part 4, only the skeleton of the torso is visible.

By changing an input parameter to imagine application, a user can create different peeled views in real time, wherein different peeling parameters apply to different segments (in this example front and back) of the volumetric dataset.

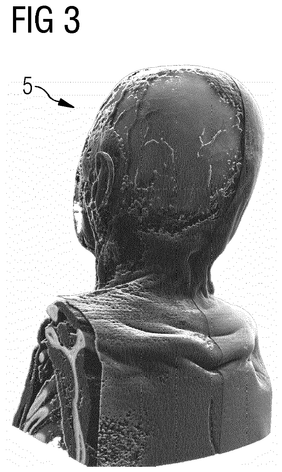

FIG. 3 schematically illustrates a further rendering of the person's upper body and head of FIG. 2 with a third different peeling depth, according to various examples.

In the image of FIG. 3, in the front part the peeling depth has been set so a lower value compared to the peeling depths of FIG. 2, such that the blood vessels become more clearly visible.

The methods according to the present disclosure may be applied to ray casting (for example with only primary rays) or path tracing (with primary rays and bounce rays). Rays are generated for the virtual camera through each pixel of the image (including stochastic jittering of pixel position and camera aperture stochastic sampling). The algorithm can be split into two phases, even though both parts can be executed within the same rendering pass (shader).

The first phase will generate a peeling depth value for each pixel of the frame buffer. Variant a) sets the peeling depth to a certain depth offset from the first found non-zero alpha value found along the primary ray. Variant b) accumulates the alpha values during ray marching along primary rays and sets the peeling depth if the accumulated alpha exceeds a user-defined threshold. Variant c) counts the number of non-zero alpha samples along the primary ray in ray marching and sets the peeling depth once the count exceeds a user defined threshold. For rendering the 3D image with peeling (second phase). Samples that are closer to the camera than the peeling depth are made invisible (peeled) by setting the alpha value to zero. Such volume samples can both come from primary rays as well as from secondary rays such as scattered or shadow rays.

In the following, steps for a rendering pass including generating a peeling depth buffer, or peeling depth map, will be described as an example for primary rays. It is to be understood, that the same methods may be applied for secondary rays, e.g. scattered, or bouncing rays, i.e. rays associated with the light sources in the ray tracing simulation, which will further improve the photorealistic effects and save further computational and memory ressources.

In a step, volume data is sampled and interpolated by ray marching from the camera through the volume data with sampling positions s and normalized ray direction d, an alpha value is determined from the transfer function for each s.

In variant a), if an alpha value of a sample along the ray exceeds an alpha threshold (usually 0) and a "peeling depth found" flag is not set, the peeling depth p is set as p = s + k*d with distance k defined by a user defined parameter (peel depth).

In variant b), if an accumulated alpha value exceeds a user-defined alpha threshold k (peel depth) and the "peeling depth found" flag is not set, the peeling depth p is set as p = s.

In variant c), if a number of non-zero alpha samples, sampled along the primary ray, exceeds a user-defined depth threshold k (peel depth) and the "peeling depth found" flag is not set, the peeling depth p is also set as p = s.

In a step, "peeling depth found" flag is set.

In a step, the sample depth of p (distance from camera) is saved to a peeling depth buffer.

If there is already a peeling depth saved in the peeling depth buffer, a minimum or average depth may be computed and save depth into the peeling depth buffer.

If the "peeling depth found" flag not set, an alpha value of current sampling point may be set to zero to remove it from being rendered.

Ray marching/path tracing is continued for normal volume rendering, including e.g. computation of absorption, emission and scattering to determine output pixel color.

In the following steps of a rendering pass, to be executed for each ray, will be described, using previously determined peeling depth values.

In a step, u-v-coordinates are computed by projecting sampling positions during ray marching or path tracing into the frame buffer.

In a step, a peel depth value is obtained from the peeling depth buffer using the u-v-coordinates.

If the sampling position depth is smaller than depth value from peeling depth buffer, the alpha value of current sampling point is set to zero to remove it from being rendered, and ray marching/path tracing is continued for normal volume rendering, including e.g. computation of absorption, emission and scattering and to determine output pixel color.

The peeling may be limited to specifies parts of the volume data, for example the left half of the volume data or to the left half of the pixels on the screen, as shown for example in FIGS. 1 to 3.

For fused volume rendering, the peeling may be limited to one of the fused volumes. When utilizing segmentation masks, the peeling may be limited to only one or multiple of the segmented structures in the data set. Additionally, the peeling could be limited to user defined region such as a pixel area around the user's mouse position or 3D region of the volume data set that is defined by a user-controller pick-event.

The removal of occluding structures with the method in this invention is view-dependent, in other words it depends on an angle of the camera view point and/or the primary rays to the visualized object, and not purely plane oriented, such as in clip-plane or crop box based methods. Thus also curved structures may be peeled. Anatomy may be peeled off layer-by-layer by adjusting the peeling threshold value. The interaction for the user is convenient, since for example the user only needs to modify a single depth peeling slider to remove anatomy. The method is fast and memory efficient, since no peeling volume needs to be generated and stored and the peeling process is interleaved with the rendering in a single pass, allowing fully interactive peeling exploration of the volume data. Alternatively, the peeling depth buffer may be generated in a separate pass to the rendering pass.

The disclosed techniques may be used for space-leaping or space-skipping in volumetric Monte Carlo path tracing, as will be explained in the following.

Volumetric Monte-Carlo path tracing can render photorealistic images of scientific volume data acquired for example by a CT scanner, however it is computationally very expensive since many light paths need to be traversed. During traversal, opacity values need to be accumulated using tri-linear interpolation of the volume data and by applying a transfer function. Depending on the transfer function, large areas of the volume data are potentially mapped to fully transparent empty space. The traversal of paths through this empty space is computationally wasteful - thus skipping quickly through this empty space is desirable for accelerating the algorithm. This ID deals with primary ray empty space skipping.

Space skipping is often achieved by adding a spatial subdivision acceleration data structure on top of the volume data, for example a uniform grid, octree or kd-tree. Traversing such accelerations structures in highly parallel computing processors such as GPU can be inefficient due to the introduction of branching instructions.

In other words, the depth of the first non-zero alpha value sample (or minimum or average depth from multiple MC iterations ) may be saved into the peeling depth buffer and may be used in subsequent rendering passes as a depth start position for ray marching.

In various examples, we allow pixel based, primary ray empty space skipping by the use of a depth buffer that stores the minimal distance between the start position of the primary rays and the first hit with a non-zero opacity sampling point along the rays. The buffer may also flag pixels where the primary rays never hit a non-fully transparent sampling point. This buffer has the same size as the image output buffer and is generated during a warm-up phase during the first iterations of Monte-Carlo path tracing.

A warmup-phase may be defined, for example to use the first n Monte Carlo rendering passes to compute the minimum/average space-leaping depth for each pixel. It is to be noted, that this may be required in MC path tracing, since pixel sampling, aperture sampling as well as sampling along the rays are stochastically jittered. Thus using the peeling depth found in only MC iteration could result in rendering artifacts. This warm-up phase may be advantageous, since primary rays in Monte-Carlo path tracing diverge due to stratified sampling of the detector pixels of the virtual camera or due to the use of a camera aperture. Consequently, there may be no single distance value for the primary ray through a pixel to the visible volume data.

The depth buffer is initialized to infinity values, or zeros, whenever a new image is computed. A given number of warm-up iterations (for example 10, 20, or 50) are executed. During such a warm up iteration, a single light-path is traversed for each pixel from the camera through the volume data. For the primary ray along such a path the first none fully transparent sampling point is detected by sampling the 3D volume and optionally applying a transfer function. The distance from the ray start position (for example at the ray bounding box intersection or the ray starting point inside the camera) is computed. The depth buffer stores the minimum of all such distances detected during the warm up phase.

After the warm-up phase, the depth buffer will contain for each pixel the minimum distance between the starting points of the primary rays and the first none fully transparent sampling point along such rays. It will contain an infinity value if none of the primary rays send during the warm-up phase hit visible data. The depth buffer can be used to accelerate the sampling along the primary rays in following Monte-Carlo iterations. For each pixel, a value from the depth buffer is obtained before tracing the path. If the depth buffer contains an infinity value, the path does not need to be traced since no hit with visible volume data was detected during the warm-up phase. If the depth buffer contains a distance, the primary ray start position can be advanced by this distance to get the sampling point right to where the visible data begins. We usually step back 2 sampling distances from this sampling point to ensure that we do not advance the sampling position too far and thus introduce space skipping artifacts. This method estimates the distance primary rays can be advanced from their start position during the warm-up phase. Afterwards, there will be a noticeable performance increase due to the closer starting sampling position to the visible data.

By generating a depth buffer during a warm-up phase of volumetric Monte-Carlo path tracing, the method improves the performance of volumetric Monte-Carlo path tracing by bringing the start position of primary ray as close to the data as possible. The distance that primary rays can be advanced is estimated in a warm-up phase with a given number of warm-up iterations. The warm-up iterations can be fixed number or based on the variance of the distances detected. Some of the warm-up iterations can also be deferred to allow space skipping early in the iteration process. For example, only a single warm-up iteration can be performed at the start of the MC iteration to get a first space-skipping estimate. Then, for the following frames, this information can be used for space-skipping, followed by a number of additional warm-up iterations with space-skipping disabled to refine the space skipping estimate. This method is useful for interactive manipulation of the volume data, since in this case often only a few iterations are computed for performance reasons. Thus, interactive rendering would not benefit from space skipping if the number of warp-up iterations would be longer than the number of iterations for interactive rendering. The method does not require the use of a spatial acceleration data structure that would introduce branching to the algorithm. The depth buffer is generated as a side product during the first iterations of MC path tracing. The method improves the performance of volumetric Monte-Carlo path tracing after the warm-up phase considerably.

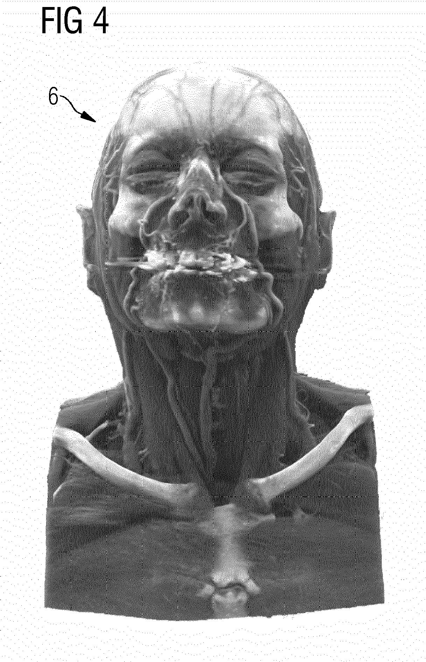

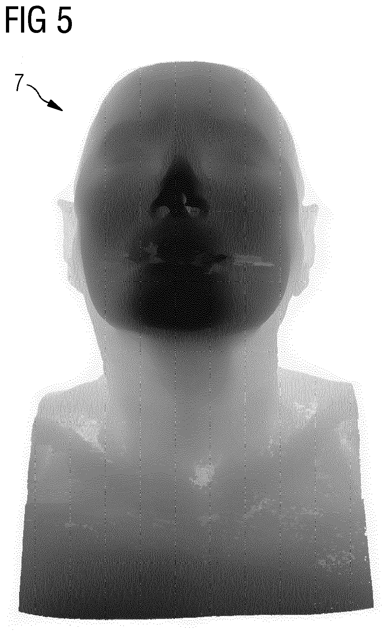

FIG. 4 schematically illustrates a photorealistic rendering of the person's head of FIG. 1, wherein samples with depths below a peeling depth have been skipped according to a depth map containing a plurality of peeling depth values during rendering, which is illustrated in FIG. 5, according to various examples.

As shown in FIG. 5, the depicted space-skipping depth map, or depth buffer, has the same number of pixels as the image in FIG. 4, wherein it includes a plurality of depth values, one for each pixel. When rendering, for example a further picture of the person's head, with the same camera position and orientation, the depth buffer may be used to start ray tracing for each pixel at the corresponding depth value, thus skipping empty non-contributing sample positions.

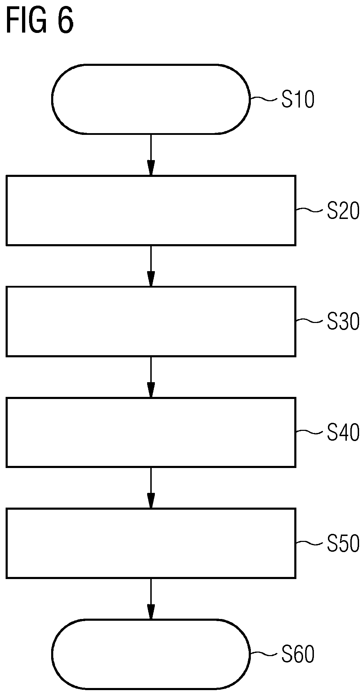

FIG. 6 schematically illustrates steps of a method for rendering an image of a volumetric medical dataset, according to various examples.

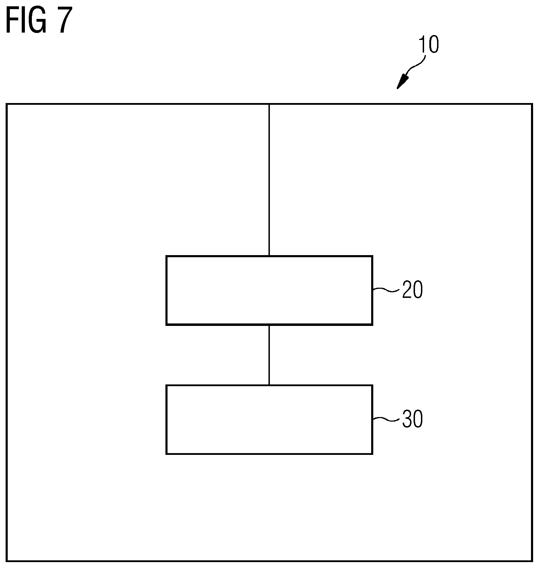

For illustration, the method of FIG. 6 could be executed by the processor 20 of FIG. 7, upon loading program code from the memory 30, or by any computing device in a medical imaging system or electronic viewing system for medical images.

The method starts in step S10.

In step S20, a plurality of samples are determined, for at least one ray to be traced along a ray path through the volumetric medical dataset, wherein the plurality of samples of the volumetric medical dataset are located along a path of a ray to be traced in a ray tracing algorithm.

In step S30, an opacity value is determined for each of the samples based on the volumetric medical dataset.

In step S40, based on the opacity values of the plurality of samples, a peeling depth is determined for the at least one ray, representing a distance from the ray origin along the ray path, or in a direction perpendicular to the camera pixel array or pixel. In other words, a pixel may be defined by inplane coordinates of the camera pixel array, wherein the depth of the sample may describe the distance from its origin pixel along the ray path, and/or the distance of the sample from the pixel array, i.e. the camera plane.

In step S50, an image is rendered of the volumetric medical dataset using the peeling depth. In general, for the pixel, at least an optical characteristic, such as colour and brightness, associated with the traced ray is determined during the rendering process, based on the peeling depth. In various examples, at least one sample with a depth lower than the peeling depth does not contribute to the determining of the optical characteristic of the pixel, and thus to the rendered image. Specifically, an opacity value of the pixel may be set to zero, such that it does not contribute to the rendered image. In various examples, during a rendering pass, the ray path starts at a sampling position closer to the rendered object, specifically at a starting sample determined based on or using the peeling depth, specifically after or around the peeling depth. In general, the peeling depth may define a subset of samples of the plurality of samples, which are passed first from the beginning along the ray path, which are to be skipped in a path tracing simulation or to be treated as transparent when rendering the image.

The method ends in step S60.

FIG. 7 schematically illustrates a computing device 10 configured for executing a method according to the present disclosure, according to various examples.

The computing device 10 comprises at least one processor 20 and memory 30, the memory 30 comprising instructions executable by the processor 20, wherein when executing the instructions in the processor 20, the computing device 10 is configured to perform the steps according to any method or combinations of methods according to the present disclosure.

In particular, the processor 20 may obtain a volumetric dataset via an interface, e.g., from a hospital database, a computer-readable storage medium, or directly from an imaging system. Upon loading program code from the memory 30, the processor 20 may process the volumetric dataset to render an image based on a peeling depth, as describe herein. Details with respect to such processing are illustrated in connection with FIG. 6.

From the above said, the following general conclusions can be drawn:
Obtaining the opacity threshold may comprise obtaining a peeling depth parameter from a user, and, responsive to said obtaining of the peeling depth parameter, determining the opacity threshold based on the peeling depth parameter, wherein said rending of the image is triggered by said obtaining of the peeling depth parameter.

The the disclosed methods may be executed for each of a plurality of pixels of an image to be rendered, wherein the plurality of peeling depths may be stored in a depth buffer of depth map, optionally associated with a virtual camera position and orientation, i.e. viewing angle, to be used in following rendering passes. In other words, at least one ray may associated with a pixel in a frame buffer used for rendering the image, wherein a peeling depth is determined for each of a plurality of pixels in the frame buffer, and the plurality of peeling depths are stored in a peeling depth buffer used for rendering the image.

A plurality of rays associated with a specific pixel may be traced along paths through the volumetric medical dataset, wherein the starting points of the rays may be statistically sampled within the pixel, wherein a plurality of peeling depths is determined for the pixel, and wherein a common peeling depth is calculated for the pixel based on the plurality of peeling depths, in a so-called warm-up phase, that may be advantageous with statistical sampling.

The disclosed methods may be executed for a primary ray of a Monte Carlo path tracing method and/or for a secondary ray of a Monte Carlo path tracing method.

The peeling depth for a pixel/ray may be determined additionally using one or more of at least part of raw measurement data of a voxel of the volumetric medical dataset associated with a sample, and one or more optical characteristics of the sample, or other characteristics determined based on the raw measurement data for the sample using a transfer function.

It would be possible, that during a rendering pass, two depth thresholds are used. For example, a first depth threshold may be referred to as space-skipping depth and a second depth threshold may be referred to as peeling depth, wherein the first depth threshold may be used for skipping samples of empty space in the ray tracing calculation before the object, and the second depth threshold is used for defining a peeling layer of the object, which is not to be rendered for the object. The first depth threshold and the second depth threshold may both be determined according to the techniques of the present disclosure. The first threshold may be determined based on the depth of the first sample, or group of samples, for a ray having non-zero opacity values. The second depth threshold may refer to a peeling feature, as defined by a user input peeling parameter.

Summarizing, for a ray to be traced through a volumetric medical dataset, a plurality of samples of the volumetric medical dataset are passed along its ray path through a volumetric medical dataset. Based on a subset of samples which are passed first from the beginning of the ray path, and which is determined based on the opacity values of the samples, a peeling depth is defined, which corresponds to a distance from the ray origin. Samples with a depth lower than the peeling depth are not to be taken into account when rendering an image from the volumetric dataset.

When performing the methods for each of a plurality of pixels of an image to be rendered from the volumetric dataset, a method for determining one or more depth buffers, or depth maps, including a plurality of peeling depths for the pixels of an image to be rendered by a ray tracing algorithm, may be provided, which allow real-time rendering an object while removing and adding peeling layers from an displayed object. By starting the ray tracing at start sampling positions defined by a space-skipping depth buffer, computational and memory ressources may be more efficiently used.

Although the invention has been shown and described with respect to certain preferred embodiments, equivalents and modifications will occur to others skilled in the art upon the reading and understanding of the specification. The present invention includes all such equivalents and modifications and is limited only by the scope of the appended claims.

For illustration, above, various scenarios have been disclosed in connection with rendering images based on a volumetric medical imaging data set. Similar techniques may be readily applied to other kinds and types of volumetric imaging data.

## Claims

1. A computer-implemented method for rendering an image of a volumetric medical dataset using path tracing of rays, comprising:
- determining, for at least one ray to be traced along a ray path through the volumetric medical dataset, a plurality of samples of the volumetric medical dataset along the ray path;
- determining an opacity value for each of the samples based on the volumetric medical dataset;
- determining, based on the opacity values of the plurality of samples, a peeling depth for the at least one ray, representing a distance from the ray origin; and
- rendering an image of the volumetric medical dataset using the peeling depth, wherein samples having a depth lower than the peeling depth are not taken into account for rendering the image.

2. The computer-implemented method of claim 1, further comprising:
- obtaining an opacity threshold for the opacity values;
wherein determining the peeling depth comprises determining the peeling depth based on the opacity threshold.

3. The computer-implemented method of claim 2, wherein said determining of the peeling depth comprises:
- determining the first sample along the ray path with an opacity value greater than the opacity threshold; and
- determining the peeling depth based on the first sample.

4. The computer-implemented method of claim 2, wherein said determining of the peeling depth comprises:
- accumulating the opacity values of the samples along the ray path to an accumulated opacity value;
- determining that the accumulated opacity value is greater than the opacity threshold; and
- determining the peeling depth based on the accumulated samples.

5. The computer-implemented method of claim 2, wherein said determining of the peeling depth comprises:
- counting the number of samples, which have opacity values greater than an counting threshold;
- determining that the number of samples is greater than the opacity threshold; and
- determining the peeling depth based on the counted samples.

6. The computer-implemented method of claim 3, wherein the opacity threshold is zero.

7. The computer-implemented method of one of claims 2-6, wherein said obtaining of the opacity threshold comprises:
- obtaining a peeling depth parameter from a user; and
- responsive to said obtaining of the peeling depth parameter:
- determining the opacity threshold based on the peeling depth parameter,
wherein said rending of the image is triggered by said obtaining of the peeling depth parameter.

8. The computer-implemented method of one of the preceding claims, further comprising:
- identifying at least one sample of the plurality of samples, which has a depth lower than the determined peeling depth,
wherein the identified at least one sample is not taken into account for rendering the image.

9. The computer-implemented method according to claim 8, further comprising:
- setting the opacity value of the identified at least one sample to zero, such that the identified sample does not contribute to the rendered image.

10. The computer-implemented method of one claims 1 to 7, wherein said rendering of the image of the volumetric medical dataset comprises:
- determining, a starting sample of a ray path using the peeling depth; and
- tracing the ray path beginning from the starting sample, wherein samples having a depth lower than the peeling depth are not taken into account during path tracing.

11. The computer-implemented method of one of the preceding claims, wherein a plurality of rays associated with a pixel are traced along paths through the volumetric medical dataset, wherein the starting points of the rays are statistically sampled within the pixel, wherein a plurality of peeling depths is determined for the pixel, and wherein a common peeling depth is calculated for the pixel based on the plurality of peeling depths.

12. The computer-implemented method of one of the preceding claims, wherein the method is executed for a primary ray of a Monte Carlo path tracing method.

13. The computer-implemented method of one of the preceding claims, wherein the method is executed for a secondary ray of a Monte Carlo path tracing method.

14. The computer-implemented method of one of the preceding claims, wherein the peeling depth for a ray is determined additionally using at least part of raw measurement data associated with a sample, and/or one or more colour values assigned to the sample.

15. Computing device (10) comprising a processor (20) and memory (30), the memory (30) comprising instructions executable by the processor (20), wherein when executing the instructions in the processor (20), the computing device (10) is configured to perform the computer-implemented method of one of claims 1-14.
